# EUROPEAN PATENT APPLICATION

(11) **EP 2 085 786 A2**
(43) Date of publication of application: **05.08.2009**
(21) Application number: 09001351.7
(22) Date of filing: 30.01.2009
(51) Int. Cl.: G01S 1/00

(54) **Apparatus and method for tracking satellite signal**

(30) Priority: 01.02.2008 KR 20080010614
(71) Applicant: Core Logic, Inc., Samseong-dong, Gangnam-gu Seoul 135-090 (KR)
(72) Inventor: Bu, Sung Chun, Seoul (KR)
(74) Representative: Grünecker, Kinkeldey, Stockmair & Schwanhäusser Anwaltssozietät

(57) **Abstract**

An apparatus for tacking a satellite signal includes a tracking module configured to generate a satellite-based measurement result by tracking the satellite signal received from the satellite. The tracking module includes a plurality of sub-tracking modules. Each sub-tracking module is configured to generate the satellite-based measurement result by using different integral time. By tracking a satellite signal according to a change in dynamic characteristics of the satellite signal, signal re-acquisition can be quickly performed and a position resolution with high reliability can be obtained.

## Description

### BACKGROUND OF THE INVENTION

### 1. Field of the Invention

The present invention relates to signal tracking and, more particularly, to an apparatus and method for tracking a satellite signal.

### 2. Related Art

A global navigation satellite system (GNSS), a system for precisely tracking the location of a target on the ground by using a network of artificial satellites staying afloat in the space, refers to the general global positioning system (GPS) operated by the U.S. Department of Defense, the Galileo positioning system being developed by the European Union, a global navigation satellite system (GLONASS) operated by Russia, and the like. The GNSS is extensively employed to acquire the location of aircrafts, vehicles, ships, etc. and also adapted for information technologies such as telematics and the like.

Typically, the GPS, a satellite navigation system providing location information by using satellites orbiting in the space, was established for the military purpose at an early stage, and since selective availability, namely, an intentional noise, was removed in 2000, it has been widely employed in various fields. The GPS satellites share frequency bands with different codes by using a code division multiple access (CDMA) scheme.

A GPS receiver measures its location by using signals from at least three satellites. A single tracking module is allocated to a single satellite to acquire a measurement result. The measurement result is data acquired based on satellite signals, which may be three-dimensional rectangular coordinates data on the earth, such as x, y, and z, or data for determining the rectangular coordinates. Conventionally, the GPS receiver includes 12 or 16 tracking modules.

In order to enhance the reliability of the GPS receiver, performance of the tracking modules for tracking satellite signals is critical. The strength of satellite signals may be severely changed due to Doppler effect or a change in a line of sight (LOS) caused by the movement of the GPS receiver. If the tracking modules fail to properly track such change in the satellite signals, a success rate of acquiring the measurement results would be sharply lowered. If a signal sensitivity of the tracking module is reduced, the measurable strength of satellite signals may be reduced so that measurement results cannot be obtained. On the contrary, if the signal sensitivity is increased, a measurement error may be increased.

Therefore, a method is sought for tracking a satellite signal that may satisfy both the dynamic characteristics according to the change in a satellite signal and signal sensitivity.

### SUMMARY

The present invention provides an apparatus and method for tracking a satellite signal capable of coping with a change in dynamic characteristics of a satellite signal.

The present invention also provides a GPS receiver capable of coping with a change in dynamic characteristics of a satellite signal.

In an aspect, an apparatus for tacking a satellite signal is provided. The apparatus includes a tracking module configured to generate a satellite-based measurement result by tracking the satellite signal received from the satellite, the tracking module comprising a plurality of sub-tracking modules, wherein each sub-tracking module is configured to generate the satellite-based measurement result by using different integral time.

In some embodiments, a sub-tracking module may include an accumulator configured to generate a correlation signal by accumulating the satellite signal by using a integral time, and a tracking loop configured to generate the satellite-based measurement result from the correlation signal. The sub-tracking module may further include a carrier remover configured to remove a carrier which has been applied by the satellite from the satellite signal, and a code remover configured to remove a code which has been applied by the satellite from the carrier-removed signal, wherein the accumulator is configured to generate the correlation signal from the code-removed signal. The tracking loop may be configured to output a control signal for controlling the carrier remover and the code remover to lock the satellite signal. When a signal strength of the measured satellite signal is lower than a threshold value, the tracking loop may be configured to output the control signal for controlling the carrier remover and the code remover by using the satellite signal measured by other sub-tracking module.

The plurality of sub-tracking modules may have each different signal sensitivity over the satellite signal. An integral time of each sub-tracking module may be shorter as the signal sensitivity of the satellite signal becomes high. The integral time of each sub-tracking module may be shorter as the sensitivity for dynamic characteristics of the satellite signal becomes high. Each integral time of each sub-tracking module may be sequentially set according to acquisition of synchronization with the satellite signal.

In another aspect, a method for tracking a satellite signal is provided. The method includes receiving a satellite signal from a satellite, and tracking the satellite signal by integrating the satellite signal based on each different integral time.

In some embodiments, the receiving the satellite signal may include removing a carrier which has been applied by the satellite from the satellite signal, and removing a code which has been applied by the satellite from the carrier-removed signal. The tracking the satellite signal may include integrating the satellite signal by using each different integral time to generate a plurality of correlation signals, and when there is a correlation signal which has lost the satellite signal among the plurality of correlation signals, tracking the satellite signal by using the other remaining correlation signals.

In still another aspect, a global positioning system (GPS) receiver is provided. The GPS receiver includes a plurality of tracking modules configured to track a plurality of satellite signals received from a plurality of GPS satellites to generate satellite-based measurement results, each tracking module tracking each GPS satellite, and a satellite processor configured to obtain a position solution from the satellite-based measurement results. At least one of the plurality of tracking modules includes a first sub-tracking module configured to tracks a satellite signal received from a GPS satellite by using a first integral time, and a second sub-tracking module configured to track the satellite signal received from the GPS satellite by using a second integral time.

By tracking a satellite signal according to a change in dynamic characteristics of the satellite signal, signal re-acquisition can be quickly performed and a position resolution with high reliability can be obtained. Thus, the reliability of the GPS receiver can be enhanced.

### BRIEF DESCRIPTION OF THE DRAWINGS

FIG. 1 is a schematic block diagram showing the configuration of a GPS receiver according to an embodiment of the present invention.
FIG. 2 is a schematic block diagram showing the configuration of a sub-tracking module of FIG. 1.
FIG. 3 is a schematic block diagram showing an example of implementation of a sub-tracking module.
FIG. 4 is a flow chart illustrating a method for setting an integral time.
FIG. 5 is a flow chart illustrating a method for tracking a satellite signal.

### DESCRIPTION OF EXEMPLARY EMBODIMENTS

A method and apparatus for tracking a satellite signal may be applied for a global navigation satellite system (GNSS) that determines a location by using the satellite signal received from an artificial satellite or a system that provides a multimedia service by using the satellite signal. The GNSS may use any satellite of a global positioning system (GPS), Galileo positioning system, a global navigation satellite system, and the like. In this disclosure, a GPS satellite refers to a satellite providing a satellite signal to the ground without being limited to a satellite applied for any particular system.

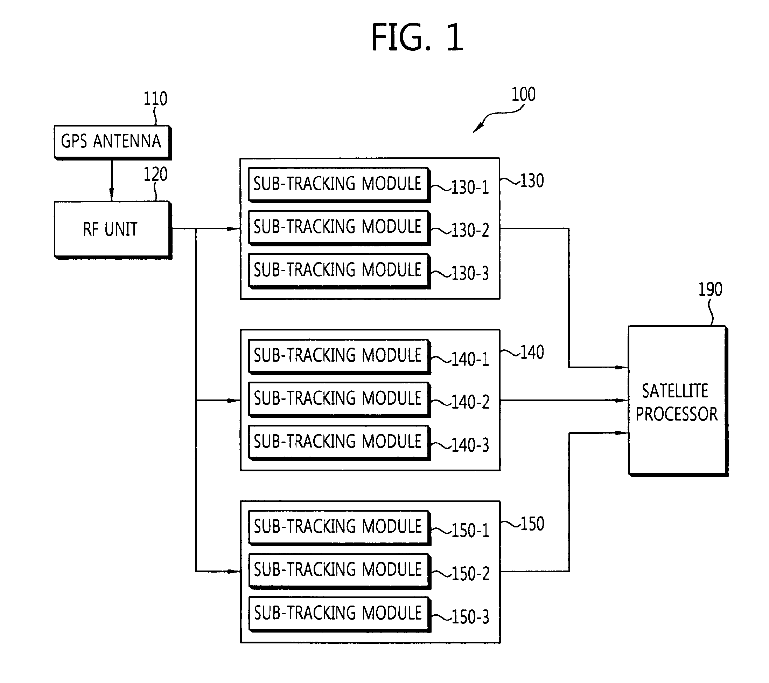

FIG. 1 is a schematic block diagram showing the configuration of a GPS receiver according to an embodiment of the present invention.

Referring to FIG. 1, a GPS receiver 100 includes a radio frequency (RF) unit 120, a plurality of tracking modules 130 to 150, and a satellite processor 190.

A composite signal of a plurality of GPS satellites received via a GPS antenna 110 is applied by the RF unit 120. The signals of the respective GPS satellites are tracked by the respective tracking modules 130 to 150. Each of the tracking modules 130 to 150 tracks a satellite signal for a single satellite. Each of the tracking modules 130 to 150 includes three sub-tracking modules. More specifically, a first tracking module 130 includes three sub-tracking modules 130-1, 130-2, and 130-3, a second tracking module 140 includes three sub-tracking modules 140-1 to 140-3, and a third tracking module 150 includes three sub-tracking modules 150-1 to 150-3.

Each of the tracking modules 130 to 150 is a satellite tracking device that outputs a satellite-based measurement result. The satellite-based measurement result is a measurement result by tracking the satellite signal. The satellite-based measurement result may include information for acquiring a signal strength of the satellite signal and/or information for acquiring position solution of the GPS receiver 100. The satellite processor 190 determines a position solution based on the satellite-based measurement results. The determined position solution may be used for route (course) data or the like.

Although it is quite conventional to track 3 to 12 satellites and therefore use 1 to 12 tracking modules, only three tracking modules are shown herein for clarify. The number of tracking modules included in the GPS receiver is not meant to be limited.

Although a tracking module includes three sub-tracking modules, there is no limit in the number of sub-tracking modules in the tracking module. A tracking module may include a plurality of sub-tracking modules. The plurality of tracking modules may include the same number of sub-tracking modules or different number of sub-tracking modules. For example, a first tracking module includes three sub-tracking modules and a second tracking module includes four sub-tracking modules,

The respective tracking modules 130 to 150 track a satellite signal for a single satellite, so their operations and functions are the same. In the following description, the first tracking module 130 will be described in detail as an example.

The three sub-tracking modules 130-1 to 130-3 in the tracking module 130 tracks a satellite signal for a satellite by using a different integral time. An integral time is the duration for integration (or accumulation). For example, a first sub-tracking module 130-1 may perform integration at an integral time of 1 ms which corresponds to the period of a coarse acquisition (C/A) code. A second sub-tracking module 130-2 may perform integration at an integral time of 20ms which corresponds to the period of data bits. A third sub-tracking module 130-3 may perform integration at an integral time of 20ms or more (e.g., 20ms to 100ms).

A different integral time may be set sequentially for the sub-tracking modules 130-1 to 130-3 according to acquisition of synchronization with a satellite signal. When the sub-tracking modules 130-1 to 130-3 receive a satellite signal at an early stage, all of them begin integration with the integral time of 1 ms. When a bit synchronization is acquired, the first sub-tracking module 130-1 continuously performs integration at the integral time of 1 ms while the second and third sub-tracking modules 130-2 and 130-3 performs integration at the integral time of 20ms. Thereafter, when a frame synchronization is acquired, the third sub-tracking module 130-3 performs integration at an integral time of more than 20ms. The bit synchronization refers to searching for a transition position of data bits based on the results value obtained by performing integration by the time unit of 1 ms, and starting an operation at the corresponding position.

Having each different integral time, the sub-tracking modules 130-1 to 130-3 have each different signal sensitivity. This means that the signal strengths that can be tracked by the each sub-tracking modules 130-1 to 130-3 are different. For example, the first sub-tracking module 130-1 may track a satellite signal of up to -145dBm, the second sub-tracking module 130-2 may track a satellite signal of up to -153dBm, and the third sub-tracking module 130-3 may track a satellite signal of up to -160dBm.

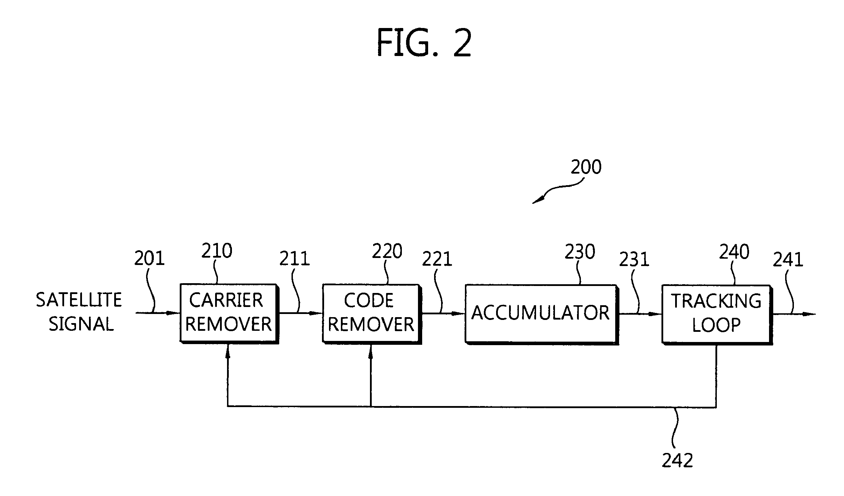

FIG. 2 is a schematic block diagram showing the configuration of the sub-tracking module of FIG. 1.

Referring to FIG. 2, a sub-tracking module 200 includes a carrier remover 210, a code remover 220, an accumulator 230, and a tracking loop 240.

The carrier remover 210 removes a carrier from a satellite signal 201. The satellite signal 201 includes a carrier which has been applied by a satellite and combined thereto, so the carrier remover 210 removes the same carrier as that applied by the satellite from the satellite signal 201. The code remover 210 removes a code from the carrier-removed signal 211 by using a copy of the code applied to the satellite signal 201 by the satellite. The carrier remover 210 and the code remover 210 generate the carrier and the code based on a control signal 242 provided by the tracking loop 240.

The accumulator 230 accumulates (integrates) the signal 221 outputted from the code remover 230 for an integral time and outputs a correlation signal 231.

The tracking loop 240 generates a satellite-based measurement result by using the correlation signal 231. In addition, the tracking loop 240 generates the control signal 242 according to a change in the satellite signal and provides the control signal 242 to the carrier remover 210 and to the code remover 210. Because the satellite signal has been distorted due to a Doppler effect or the like, the control signal 242 controls the carrier applied by the carrier remover 210 and the code applied by the code remover 210 to compensate the distortion. The tracking loop 240 generates the control signal 242 so that there is no delay between the code applied by the satellite which has transmitted the satellite signal 201 and the code coped by the code remover 210, and also generates the control signal 242 so that the frequency and phase of the carrier of the satellite signal 210 and those of the copied carrier can be the same. This is called locking of the satellite signal 201. In order to lock the satellite signal 201, the tracking loop 240 may apply a frequency lock loop (FLL) or a phase lock loop (PLL) for carrier tracking and apply a delay lock loop (DLL) for code tracking.

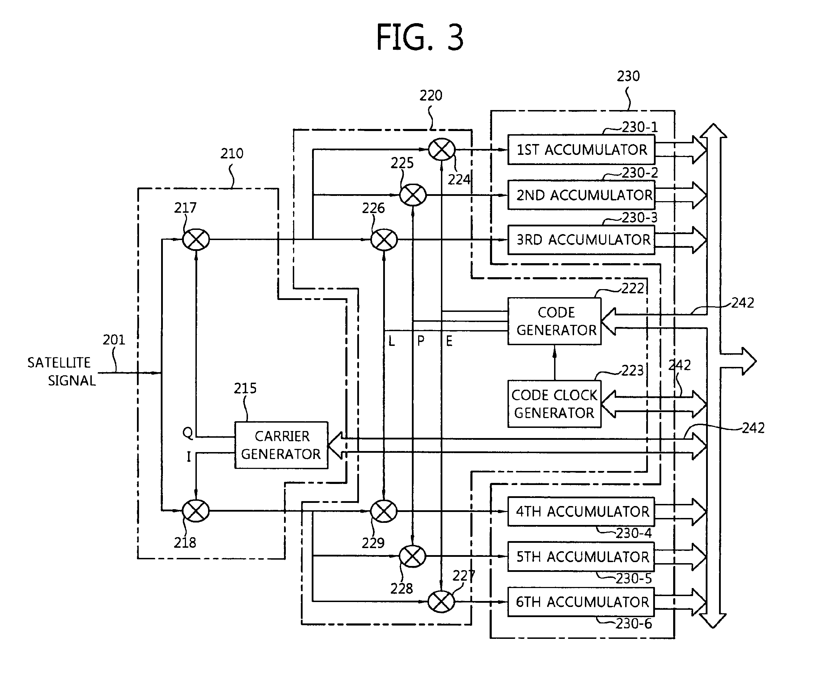

FIG. 3 is a block diagram showing an example of implementation of a sub-tracking module. The carrier remover 210 includes a carrier generator 215 and carrier mixers 217 and 218. The carrier generator 215 generates a carrier whose frequency is varied according to the control signal 242 from the tracking loop 240. The carrier mixers 217 and 218 remove the carrier applied by the satellite which has transmitted the satellite signal 201 by mixing the received satellite signal 201 and the generated carrier. In this case, the two carrier mixers 217 and 218 are provided in order to remove the carrier by dividing the phase of the carrier into I-phase and Q-phase.

The code remover 220 includes a code generator 222, a code clock generator 223, and a plurality of code mixers 224, 225, 226, 227, 228, and 229. The code clock generator 223 generates a clock signal according to the control signal 242 from the tracking loop 240. The code generator 222 generates a code according to the control signal 242 from the tracking loop 240 and the clock signal. In more detail, the code generator 222 generates Prompt (P) code, and Early (E) code and Late (L) code of a delay within one chip with respect to the phase of the carrier, namely, the I-phase and the Q-phase. The plurality of code mixers 224 to 229 remove the code from the satellite signal by using the code which has been generated by the code generator 222.

The accumulator 230 accumulates the signal outputted from the code remover 220 for an integral time, and outputs a correlation signal. The correlation signal generated by the accumulator 230 may be the results of correlation between the I-phase signal and the P, E, and L codes, and of the correlation between the Q-phase signal and the P, E, and L codes during the integral time. The accumulator 230 may include accumulators 230-1, 230-2, 230-3, 230-4, 230-5, and 230-6 corresponding to the number of the code mixers 224 to 229 included in the code remover 230.

Referring back to FIG. 1, the integral time is set to be different for the each sub-tracking modules, and the accumulator of the sub-tracking module performs accumulation (integration) for a pre-set integral time. Although one of the three sub-tracking modules 130-1 to 130-3 loses the satellite signal, the corresponding sub-tracking module can continuously update the control signal by using data outputted from the other sub-tracking modules. If signal sensitivity of the sub-tracking modules 130-1 to 130-3 is set to be different, the first sub-tracking module 130-1 with the best signal sensitivity (namely, good signal sensitivity) may first lose the satellite signal. In this case, remaining sub-tracking modules 130-2 and 130-3 with a less good signal sensitivity can still keep tracking of the satellite signal. The first sub-tracking module 130-1 can continuously update the control signal by using tracking signals of the other remaining sub-tracking modules 130-2 and 130-3. If the first sub-tracking module 130-1 acquires the satellite signal again according to a change in a situation, the first sub-tracking module 130-1 can immediately recognize a signal acquisition search range, so the signal re-acquisition time can be reduced.

Because the three sub-tracking modules 130-1 to 130-3 use each different integral time, although one of the sub-tracking modules loses a signal, the control signal of the corresponding sub-tracking module which has lost the signal can be continuously updated by using the data outputted from the other remaining sub-tracking modules, thereby reducing the signal re-acquisition time.

If the signal strength, e.g., a signal-to-noise ratio (SNR), of the received satellite signal is lower than a threshold value, each sub-tracking module may determine that a signal is missing (namely, a signal has been lost). As the integral time shortens, the threshold value of the signal strength of a receivable signal is reduced, so the satellite signals may be frequently lost.

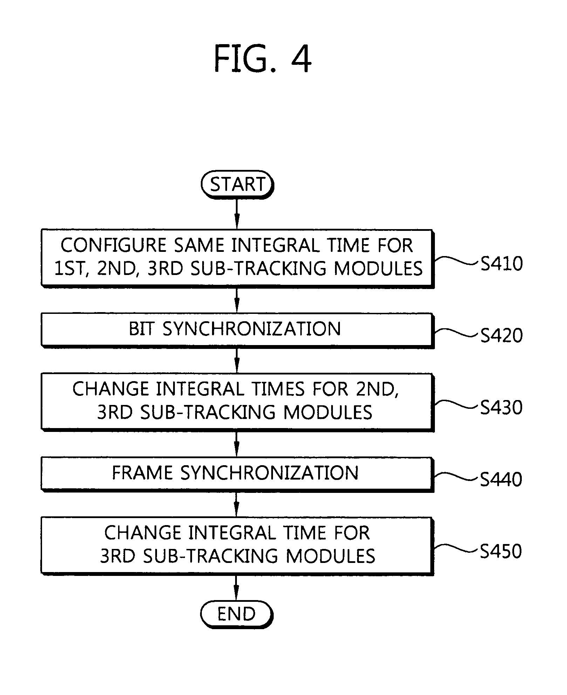

FIG. 4 is a flow chart illustrating a method for setting an integral time.

Referring to FIG. 4, in step S410, the same integral time, e.g., 1 ms, is set (configured) for the sub-tracking modules 130-1 to 130-3.

In step S420, after the sub-tracking modules 130-1 to 130-3 start with the same integral time of 1 ms, when integration results (namely, correlation values) are transferred to each tracking loop, each tracking loop performs bit synchronization based on the integral results. The respective sub-tracking modules 130-1 to 130-3 discriminate the position of data bits based on the integral results. For example, the position of bits may be discriminated by a method of phase locked loop changing from 0 to 1 and from 1 to 0 appearing in received data.

In step S430, with the integral time of the first sub-tracking module 130-1 maintained as 1 ms, each integral time of the second and third sub-tracking modules 130-2 and 130-3 is changed to 20ms, a data bit period. Accordingly, the first sub-tracking module 130-1 performs integration at the integral time of 1 ms, while the second and third sub-tracking modules 130-2 and 130-3 perform integration at the integral time of 20ms.

In step S440, the third sub-tracking module 130-3 performs frame synchronization to determine whether or not one frame data bit is acquired based on the outputted integral results.

In step S450, when the frame synchronization is acquired, the integral time of the third sub-tracking module 130-3 is changed to more than 20ms.

As a result, after one frame bit is acquired, the first sub-tracking module 130-1 performs integration at the integral time of 1 ms, the second sub-tracking module 130-2 performs integration at the integral time of 20ms, and the third sub-tracking module 130-3 performs integration at the integral time of more than 20ms. Thus, because the second sub-tracking module 130-2 has the integral time longer than that of the first sub-tracking module 130-1, it cannot lose a signal even in an area of a bad signal sensitivity. In addition, the third sub-tracking module 130-3 has the integral time longer than that of the second sub-tracking module 130-2, so it has a better signal sensitivity.

When mobility of a user is high, a first sub-tracking module having the integral time of 1 ms may outperform other sub-tracking modules. Under environment in which the speed/acceleration of the user is high, long integration time may result in losing a satellite signal. By using a plurality of sub-tracking modules having different integral time, the satellite signal can be tracked under environment which experiences high acceleration.

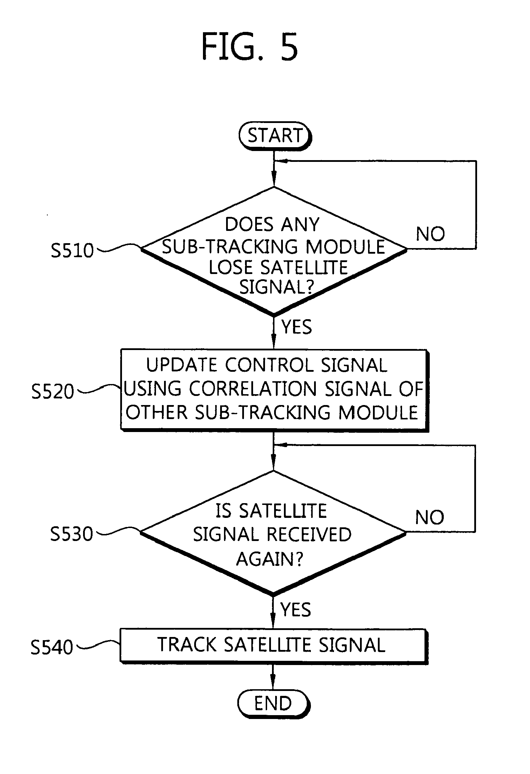

FIG. 5 is a flow chart illustrating a method for tracking a satellite signal. It is assumed that the first sub-tracking module 130-1 performs integration at the integral time of 1 ms, the second sub-tracking module 130-2 performs integration at the integral time of 20ms, and the third sub-tracking module 130-3 performs integration at the integral time of more than 20ms.

In step S510, the sub-tracking modules 130-1 to 130-3 check whether or not a satellite signal is missing by using a signal strength of the satellite signal. The signal strength may be the SNR, and if the signal strength is lower than a certain value, it may be determined that the satellite signal is missing.

In step S520, the sub-tracking module, which has lost the satellite signal, updates a control signal by using a correlation signal of the other sub-tracking modules. Namely, if the GPS receiver is located in an area where the signal sensitivity is not good, the first sub-tracking module 130-1 may first lose the satellite signal. Then, the first sub-tracking module 130-1 can continuously update the control signal for generating a carrier and a code through signals acquired by the other sub-tracking modules (e.g., the second sub-tracking module 130-2 and/or the third sub-tracking module 130-3).

In step S530, the first sub-tracking module 130-1 determines whether or not the satellite signal has been received again. If the signal strength of a received satellite signal is higher than a certain vale, it may determine that the satellite signal has been received again.

In step S540, the first sub-tracking module 130-1, which has received the satellite signal again, initiates tracking by immediately applying a suitable carrier and code from the received satellite signal through the updated control signal. If the first sub-tracking module 130-1 generates the carrier and the code through the re-received satellite signal, time for generating the control signal therefore would be required. However, because the first sub-tracking module 130-1 uses the already updated control signal, the immediate application can be possible. Thus, time required for acquiring the satellite signal again can be reduced and the signal tracking can be initiated more quickly.

When dynamic characteristics of the satellite signal change suddenly, the use of a single tracking module for a single satellite may increase the possibility of losing a signal. Thus, one tracking module includes the plurality of sub-tracking modules, and each sub-tracking module has each different integral time and/or signal sensitivity, thereby effectively tracking the satellite signal according to its dynamic characteristics.

By tracking a satellite signal according to a change in dynamic characteristics of the satellite signal, signal re-acquisition can be quickly performed and a position resolution with high reliability can be obtained. Thus, the reliability of the GPS receiver can be enhanced.

The present invention can be implemented with hardware, software, or combination thereof. In hardware implementation, the present invention can be implemented with one of an application specific integrated circuit (ASIC), a digital signal processor (DSP), a programmable logic device (PLD), a field programmable gate array (FPGA), a processor, a controller, a microprocessor, other electronic units, and combination thereof, which are designed to perform the aforementioned functions. In software implementation, the present invention can be implemented with a module for performing the aforementioned functions. Software is storable in a memory unit and executed by the processor. Various means widely known to those skilled in the art can be used as the memory unit or the processor.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. An apparatus for tacking a satellite signal, the apparatus comprising:
a tracking module configured to generate a satellite-based measurement result by tracking the satellite signal received from the satellite, the tracking module comprising a plurality of sub-tracking modules, wherein each sub-tracking module is configured to generate the satellite-based measurement result by using different integral time.

2. The apparatus of claim 1, wherein a sub-tracking module comprises:
an accumulator configured to generate a correlation signal by accumulating the satellite signal by using a integral time; and
a tracking loop configured to generate the satellite-based measurement result from the correlation signal.

3. The apparatus of claim 2, wherein the sub-tracking module further comprises:
a carrier remover configured to remove a carrier which has been applied by the satellite from the satellite signal; and
a code remover configured to remove a code which has been applied by the satellite from the carrier-removed signal,
wherein the accumulator is configured to generate the correlation signal from the code-removed signal.

4. The apparatus of claim 3, wherein the tracking loop is configured to output a control signal for controlling the carrier remover and the code remover to lock the satellite signal.

5. The apparatus of claim 4, wherein when a signal strength of the measured satellite signal is lower than a threshold value, the tracking loop is configured to output the control signal for controlling the carrier remover and the code remover by using the satellite signal measured by other sub-tracking module.

6. The apparatus of claim 1, wherein the plurality of sub-tracking modules have each different signal sensitivity over the satellite signal.

7. The apparatus of claim 6, wherein an integral time of each sub-tracking module is shorter as the signal sensitivity of the satellite signal becomes high.

8. The apparatus of claim 1, wherein the integral time of each sub-tracking module is shorter as the sensitivity for dynamic characteristics of the satellite signal becomes high.

9. The apparatus of claim 1, wherein each integral time of each sub-tracking module is sequentially set according to acquisition of synchronization with the satellite signal.

10. A method for tracking a satellite signal, the method comprising:
receiving a satellite signal from a satellite; and
tracking the satellite signal by integrating the satellite signal based on each different integral time.

11. The method of claim 10, wherein the receiving the satellite signal comprises:
removing a carrier which has been applied by the satellite from the satellite signal; and
removing a code which has been applied by the satellite from the carrier-removed signal.

12. The method of claim 10, wherein the tracking the satellite signal comprises:
integrating the satellite signal by using each different integral time to generate a plurality of correlation signals; and
when there is a correlation signal which has lost the satellite signal among the plurality of correlation signals, tracking the satellite signal by using the other remaining correlation signals.

13. A global positioning system (GPS) receiver comprises:
a plurality of tracking modules configured to track a plurality of satellite signals received from a plurality of GPS satellites to generate satellite-based measurement results, each tracking module tracking each GPS satellite; and
a satellite processor configured to obtain a position solution from the satellite-based measurement results,
wherein at least one of the plurality of tracking modules comprises;
a first sub-tracking module configured to tracks a satellite signal received from a GPS satellite by using a first integral time; and
a second sub-tracking module configured to track the satellite signal received from the GPS satellite by using a second integral time.

14. The GPS receiver of claim 13, wherein the at least one tracking module further comprises:
a third sub-tracking module configured to track the satellite signal received from the GPS satellite by using a third integral time.

15. The GPS receiver of claim 13, wherein each sub-tracking module comprises:
an accumulator configured to generate a correlation signal by accumulating the satellite signal by using an integral time; and
a tracking loop configured to generate a satellite-based measurement value from the correlation signal.
